# FASCICULE DE BREVET EUROPEEN

(11) **EP 4 466 391 B1**
(45) Date de publication et mention de la délivrance du brevet: **11.03.2026**
(21) Numéro de dépôt: 23703833.6
(22) Date de dépôt: 12.01.2023
(51) Int. Cl.: H01M 8/1246, H01M 8/2465, C25B 1/042, H01M 8/12, H01M 8/2432, H01M 8/2404, C25B 15/00, C25B 9/73

(54) **EMPILEMENT DE CELLULES À OXYDES SOLIDES DE TYPE SOEC/SOFC COMPRENANT DES ÉLÉMENTS DE GUIDAGE INTERNES**
SOEC/SOFC-FESTOXIDZELLENSTAPEL MIT INNEREN FÜHRUNGSELEMENTEN
STACK OF SOEC/SOFC SOLID OXIDE CELLS HAVING INNER GUIDING ELEMENTS

(30) Priorité: 17.01.2022 FR 2200369
(43) Date de publication de la demande: 27.11.2024
(73) Titulaire: Commissariat à l'Energie Atomique et aux Energies Alternatives, 75015 Paris (FR)
(72) Inventeur: GILLIA, Olivier, 38054 GRENOBLE CEDEX 09 (FR); MONTEREMAND, Mathieu, 38054 GRENOBLE CEDEX 09 (FR)
(74) Mandataire: Santarelli
(86) Numéro de dépôt international: PCT/FR2023/050043
(87) Numéro de publication internationale: WO 2023/135392

(56) Documents cités:
- EP-A1- 1 826 851

## Description

### DOMAINE TECHNIQUE

La présente invention se rapporte au domaine général de l'électrolyse à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de la vapeur d'eau et du dioxyde de carbone (CO₂) à haute température.

Plus précisément, l'invention se rapporte au domaine des électrolyseurs à oxydes solides à haute température, désignés habituellement par l'acronyme SOEC (pour « Solide Oxide Electrolysis Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements à oxydes solides de type SOEC/SOFC fonctionnant à haute température.

Plus précisément, l'invention concerne un empilement de cellules à oxydes solides de type SOEC/SOFC comprenant des éléments de guidage internes, ainsi qu'un procédé de conditionnement associé.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) ou d'autres combustibles tels que le méthane (CH₄), le gaz naturel, le biogaz, et en dioxygène (O₂), par exemple le dioxygène contenu dans l'air. Par souci de simplicité, la description suivante privilégie le fonctionnement d'un électrolyseur à oxydes solides à haute température de type SOEC réalisant l'électrolyse de la vapeur d'eau. Toutefois, ce fonctionnement est applicable à l'électrolyse du dioxyde de carbone (CO₂), voire encore de la co-électrolyse de la vapeur d'eau à haute température avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en œuvre l'électrolyse de la vapeur d'eau à haute température (EVHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, l'apport en réactifs et l'évacuation des produits pour chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT ; air et combustible dont l'hydrogène injecté et eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le carburant, tandis que le compartiment cathodique comporte le combustible.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

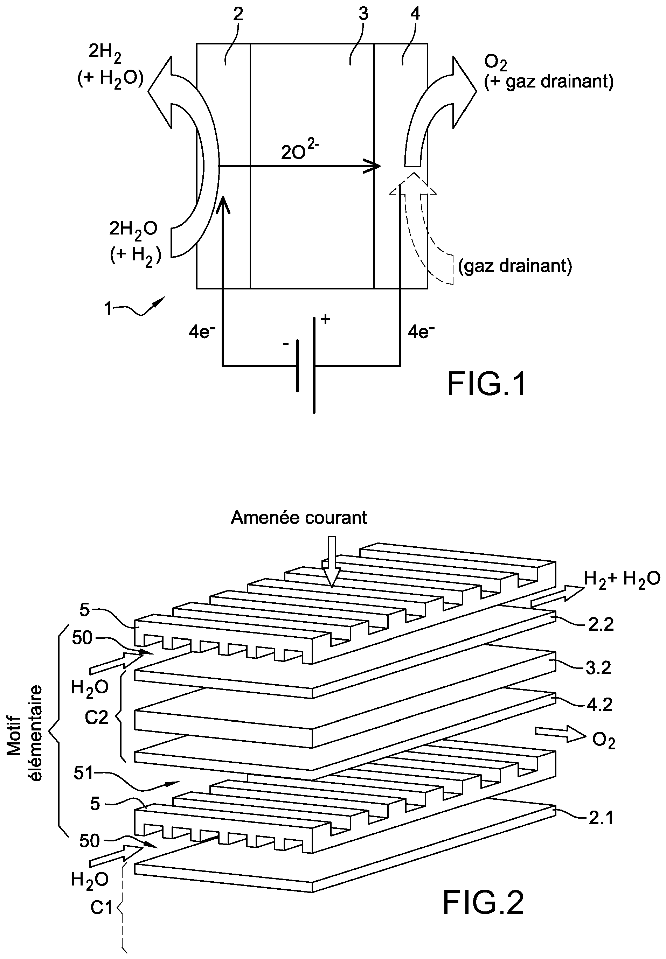

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂ + 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée côté anode pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique et fluidique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et les alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type cellules à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Afin de garantir un bon contact électrique entre l'ensemble des interconnecteurs, les cellules électrochimiques et les interconnecteurs sont enserrées entre deux plaques rigides, appelées plaque terminale supérieure et plaque terminale inférieure, isolées électriquement des interconnecteurs. Le sandwich ainsi formé est appelé « stack », et correspond ainsi à l'ensemble comprenant les plaques terminales supérieure et inférieure, les cellules électrochimiques et les interconnecteurs. Ce stack doit être maintenu sous un effort de compression pour assurer la bonne continuité électrique des plans de contacts entre les plaques.

Durant la première phase de fabrication des empilements ou stacks, on procède à la formation du scellement vitrocéramique en faisant subir au stack un cycle thermique tout en appliquant un effort de compression contrôlé sur l'empilement. Ce cycle thermique s'appelle le cycle de conditionnement.

En effet, les diverses étanchéités entre circuits sont assurées par des joints en verre fondu. Ce verre fondu est obtenu par dépôt de barbotine, précurseur du verre. La barbotine est déposée sous forme de cordons en sandwich entre les plaques d'interconnexion (ou interconnecteurs). Cette barbotine sèche ensuite sur place pour donner lieu à un cordon constitué de poudre de verre additionnée de liants organiques. Ainsi, à froid, avant le cycle de montée en température qui formera le verre, les plaques d'interconnexion sont séparées par des cordons de barbotine séchée. Ces cordons fondront lors du cycle de chauffe, et les contacts s'établiront au niveau des zones réactives décrites précédemment. La fusion des cordons peut résulter en une réduction de plus de 50 % de l'épaisseur du cordon de barbotine. Ces cordons peuvent aussi être constitués de verre déjà densifié, en sandwich entre deux interconnecteurs successifs de l'empilement. Tout comme lors du cycle de conditionnement avec cordons de barbotine séchée, la fusion du joint en verre va provoquer l'affaissement de l'espace entre les interconnecteurs, mais dans une moindre mesure qu'avec la barbotine.

Dans tous les cas, il est important d'assurer un guidage selon une direction perpendiculaire au plan des interconnecteurs, soit encore colinéaire à la direction de l'effort de compression des plaques d'interconnexion et des plaques terminales. Un tel guidage permet de garantir que, lors de l'affaissement du stack, qui se produit lors de la formation du verre, les pièces constitutives du stack (notamment interconnecteurs, plaques d'isolant, plaques terminales) restent correctement alignées les unes par rapport aux autres. Durant cette phase, la hauteur du stack diminue de pratiquement 50 % et se traduit donc par un important mouvement vertical de l'empilement.

Le développement des systèmes industriels intégrant des électrolyseurs haute température passe par un accroissement du volume de gaz traité (en SOEC ou SOFC). Pour ce faire, l'augmentation de la surface, du nombre des cellules et des interconnecteurs, est nécessaire. Or, un accroissement significatif du nombre de plaques et donc de la hauteur des stacks pose de nombreuses difficultés techniques, notamment durant les phases de fabrication. En effet, plus la hauteur des stacks est importante, plus l'amplitude de l'affaissement lors de la phase de conditionnement devient importante, plus la maîtrise du guidage devient critique.

Dans les conceptions actuelles, ce guidage est assuré par des colonnes cylindriques positionnées à l'intérieur de la structure du stack traversant les différentes plaques dans lesquelles sont usinées des trous cylindriques ou oblongs ajustés au diamètre des colonnes. La base de ces colonnes est mécaniquement bloquée dans la plaque terminale inférieure.

Ce type de dispositif présente différentes limitations liées aux faibles diamètres des colonnes de guidage imposés par la structure interne des interconnecteurs. L'obtention d'un guidage satisfaisant de nombreuses plaques fines sur de grandes hauteurs par ce type de colonnes implique une maîtrise fine des jeux relatifs entre les colonnes et les diamètres des trous de passage. Ce type de montage avec des jeux serrés expose au risque d'arcboutement en rotation qui peut se produire lors du cycle de la formation de la vitrocéramique de scellement, durant lequel le stack montre un affaissement significatif de sa hauteur. A noter que l'effort appliqué pour assurer le contact des différentes plaques n'est pas si important, et donc que tout coincement intempestif des plaques par rapport à leurs éléments de guidage est problématique.

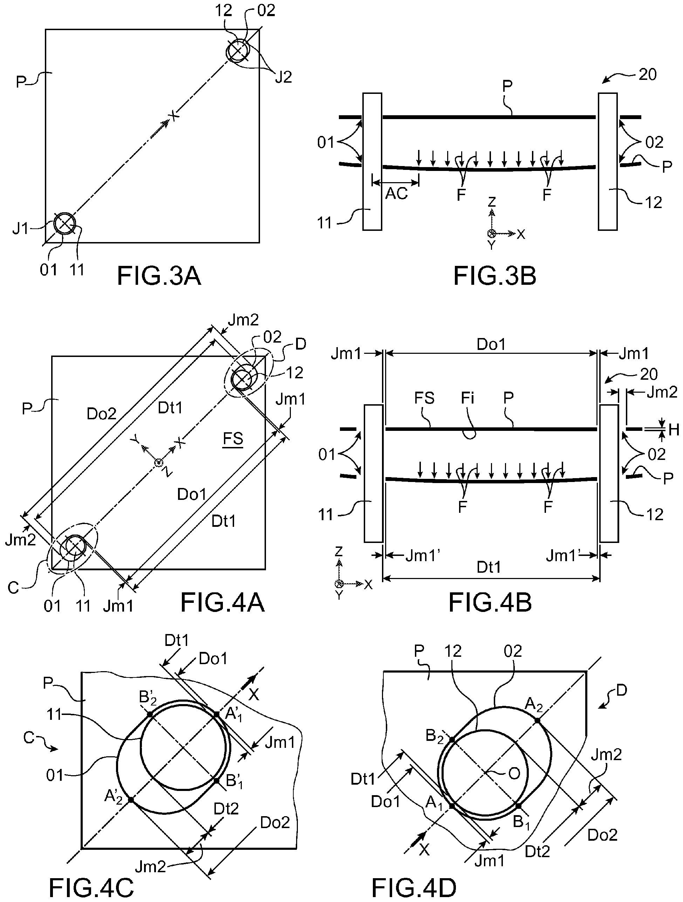

A titre d'illustration, les figures 3A et 3B représentent la solution actuelle de guidage. Deux colonnettes 11 et 12 sont employées pour guider les plaques P de l'empilement 20 ou stack (ici représenté très schématiquement) dans leur descente. Les plaques P peuvent être des plaques d'interconnexion, des plaques isolantes, ou encore les plaques terminales inférieure et supérieure. Ici, sur la figure 3B, on considère par exemple que sont représentées deux plaques d'interconnexion P, les autres plaques éventuelles d'interconnexion et isolantes et les plaques terminales inférieure et supérieure ne sont donc pas représentées.

D'un côté, on utilise un orifice O1 de forme circulaire en section, et l'ajustement entre la plaque P et la colonnette 11 est très fin, par exemple de l'ordre de 0,1 mm de jeu J1. De l'autre côté, l'orifice O2 dans la plaque P est de forme oblongue en section, laissant un jeu J2 plus important. Alors, le fait d'appuyer au centre pour faire descendre les plaques P, comme selon les flèches F, au fur et à mesure de la fusion des joints vitrocéramiques peut provoquer une légère flexion de ces plaques P, et ainsi provoquer un blocage par arcboutement, représenté par AC sur la figure 3B, sur la colonne 11 sur laquelle l'ajustement est serré. Dans la pratique, afin d'éviter ces risques d'arcboutement AC, le jeu J1 autour de la colonne de guidage 11 peut être drastiquement augmenté, ce qui dégrade alors fondamentalement la fonction de guidage et n'est donc pas du tout souhaitable.

Le document EP 1 826 851 divulgue un tel exemple d'empilement de cellules possédant des éléments de guidage internes.

Il existe ainsi un besoin pour proposer une solution de guidage efficace permettant d'éviter ce problème d'arcboutement tout en conservant une précision de guidage lors de l'affaissement de l'empilement de plaques ou stack.

### EXPOSÉ DE L'INVENTION

L'invention a pour but de remédier au moins partiellement aux besoins mentionnés précédemment et aux inconvénients relatifs aux réalisations de l'art antérieur.

L'invention a ainsi pour objet, selon l'un de ses aspects, un empilement de cellules à oxydes solides de type SOEC/SOFC fonctionnant à haute température, constitué d'une pluralité de plaques empilées les unes sur les autres selon une direction verticale sensiblement perpendiculaire à chaque plan horizontal d'étendue de chaque plaque, ladite pluralité de plaques comportant au moins :
- une pluralité de cellules électrochimiques formées chacune d'une cathode, d'une anode et d'un électrolyte intercalé entre la cathode et l'anode, et une pluralité d'interconnecteurs agencés chacun entre deux cellules électrochimiques adjacentes,
- une plaque terminale supérieure et une plaque terminale inférieure, entre lesquelles la pluralité de cellules électrochimiques et la pluralité d'interconnecteurs sont enserrées,

ledit empilement comportant en outre au moins deux éléments de guidage assurant le guidage en empilement vertical d'au moins une partie des plaques,
chaque plaque de ladite au moins une partie des plaques comportant au moins deux orifices de guidage débouchant chacun sur les faces supérieure et inférieure de chaque plaque et permettant le passage desdits au moins deux éléments de guidage,
caractérisé en ce que, par observation en section dans un plan horizontal d'étendue de chaque plaque de ladite au moins une partie des plaques, lesdits au moins deux orifices de guidage sont alignés selon une première direction horizontale et espacés d'une plus petite distance inter-orifices, lesdits au moins deux éléments de guidage étant espacés d'une plus petite distance inter-éléments supérieure à la plus petite distance inter-orifices, la différence entre la plus petite distance inter-éléments et la plus petite distance inter-orifices, correspondant au jeu interne, étant identique pour lesdits au moins deux orifices de guidage et lesdits au moins deux éléments de guidage,
en ce que, selon la première direction horizontale, lesdits au moins deux orifices de guidage sont espacés d'une plus grande distance inter-orifices, lesdits au moins deux éléments de guidage étant espacés d'une plus grande distance inter-éléments inférieure à la plus grande distance inter-orifices, la différence entre la plus grande distance inter-orifices et la plus grande distance inter-éléments, correspondant au jeu externe,
et en ce que le jeu externe est supérieur au jeu interne.

L'empilement selon l'invention peut en outre comporter l'une ou plusieurs des caractéristiques suivantes prises isolément ou suivant toutes combinaisons techniques possibles.

Le jeu interne est avantageusement supérieur à 0, en particulier supérieur à 0,6 µm, et notamment compris entre 1 µm et 100 µm.

Le jeu externe est avantageusement supérieur au jeu interne, et notamment compris entre 0,5 mm et 3 mm.

Le rapport entre jeu externe et jeu interne peut être supérieur à 30, notamment compris entre 30 et 500.

La valeur du jeu interne et/ou du jeu externe peut être fonction de l'épaisseur de la ou des plaques, et également de l'inclinaison possible, ou tolérée, de celles-ci, par mouvement de corps solide local ou par déformation, en particulier en flexion. Aussi, le niveau d'effort presseur et la rigidité des plaques interviennent dans la détermination de cette valeur.

De plus, le jeu externe peut être identique pour lesdits au moins deux orifices de guidage et lesdits au moins deux éléments de guidage.

Lesdits au moins deux orifices de guidage peuvent présenter la même forme et les mêmes dimensions.

Par ailleurs, lesdits au moins deux orifices de guidage peuvent présenter, en section, une forme oblongue, ou une forme circulaire, ou une forme polygonale, notamment une forme carrée ou rectangulaire, avec notamment au moins l'angle au plus proche du centre de la plaque faisant un angle différent de 90°, notamment supérieur à 90°.

En outre, chaque plaque de ladite au moins une partie des plaques peut être de forme carrée ou rectangulaire. Lesdits au moins deux orifices de guidage peuvent être diagonalement opposés.

Lesdits au moins deux éléments de guidage peuvent être des tiges de guidage de forme cylindrique, et notamment de forme circulaire en section.

Par ailleurs, par observation en section dans un plan horizontal d'étendue de chaque plaque de ladite au moins une partie des plaques, la plus grande dimension d'orifice de guidage de chaque orifice de guidage, selon une deuxième direction horizontale perpendiculaire à la première direction horizontale, peut être supérieure à la plus grande dimension d'élément de guidage de chaque élément de guidage, mesurée selon la deuxième direction horizontale.

De plus, le rapport entre la plus grande dimension d'orifice de guidage et la plus grande dimension d'élément de guidage, mesurées selon la deuxième direction horizontale, peut être compris entre 1 et 3. Ce rapport peut être déterminé en fonction des divers paramètres tels que l'épaisseur de plaque, la rigidité de plaque, l'inclinaison possible de plaque, entre autres. Cette détermination se fait par calcul mécanique avec pour critère géométrique d'assurer l'existence d'un jeu fonctionnel, en prenant en compte les mouvements de corps solides des éléments mécanique ainsi que leur déformation éventuelle.

En outre, l'invention a également pour objet, selon un autre de ses aspects, un procédé de conditionnement d'un empilement de cellules à oxydes solides de type SOEC/SOFC fonctionnant à haute température tel que défini précédemment, caractérisé en ce qu'il comporte l'étape de guidage en empilement vertical d'au moins une partie des plaques constitutives de l'empilement par le biais desdits au moins deux éléments de guidage.

L'étape de guidage peut être mise en œuvre tout en conservant un écart sensiblement constant entre lesdits au moins deux éléments de guidage et lesdits au moins deux orifices de guidage.

De plus, lesdits au moins deux éléments de guidage étant fixés dans un socle de conditionnement, le procédé peut comporter l'étape d'utilisation de mêmes coefficients de dilatation thermique pour les matériaux des plaques et du socle de conditionnement.

En particulier, les matériaux utilisés pour les plaques et le socle de conditionnement peuvent être identiques pour avoir le même coefficient de dilatation thermique ou différents mais avec un même coefficient de dilatation thermique.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- [Fig. 1] est une vue schématique montrant le principe de fonctionnement d'un électrolyseur à oxydes solides à haute température (SOEC),
- [Fig. 2] est une vue schématique éclatée d'une partie d'un électrolyseur à oxydes solides à haute température (SOEC) comprenant des interconnecteurs selon l'art antérieur,
- [Fig. 3A] et [Fig. 3B] représentent, schématiquement et partiellement, respectivement selon une vue du dessus et selon une vue latérale, un principe selon l'art antérieur de guidage des plaques d'un empilement de type SOEC/SOFC haute température,
- [Fig. 4A] et [Fig. 4B] représentent, schématiquement et partiellement, respectivement selon une vue du dessus et selon une vue latérale, un exemple conforme à l'invention de guidage des plaques d'un empilement de type SOEC/SOFC haute température,
- [Fig. 4C] et [Fig. 4D] sont respectivement des vues agrandies selon C et D de [Fig. 4A],
- [Fig. 5A] représente, schématiquement et partiellement, selon une vue du dessus, un autre exemple conforme à l'invention de guidage des plaques d'un empilement de type SOEC/SOFC haute température,
- [Fig. 5B] est une vue agrandie selon B1 de [Fig. 5A],
- [Fig. 6A] représente, schématiquement et partiellement, selon une vue du dessus, encore un autre exemple conforme à l'invention de guidage des plaques d'un empilement de type SOEC/SOFC haute température, et
- [Fig. 6B] est une vue agrandie selon B1 de [Fig. 6A].

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 à 3 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur », « inférieur », « horizontal » et « vertical » sont à comprendre ici selon le sens d'orientation normal d'un empilement de type SOEC/SOFC lorsque dans sa configuration d'utilisation.

Les figures 4A à 6B permettent d'illustrer le principe de guidage conforme à l'invention.

Tout d'abord, les figures 4A à 4D représentent une première possibilité de guidage en empilement des plaques P d'un empilement 20 de cellules à oxydes solides de type SOEC/SOFC à haute température, les plaques P étant positionnées les unes sur les autres selon une direction verticale sensiblement perpendiculaire à chaque plan horizontal d'étendue de chaque plaque P.

Il est à noter que, dans tous les exemples décrits ici, une plaque P peut correspondre notamment à une cellule électrochimie C1, C2, un interconnecteur 5, une plaque terminale supérieure ou une plaque terminale inférieure, voire encore une plaque d'isolant. Préférentiellement, la plaque P sera généralement un interconnecteur 5.

Ce guidage en empilement vertical est réalisé à l'aide de deux éléments de guidage 11 et 12, ici sous la forme de tiges ou colonnettes de guidage. Ces colonnettes de guidage 11, 12 sont ici diagonalement espacées sur chaque plaque P de forme carrée, mais ce choix n'est pas limitatif.

De plus, chaque plaque P comporte deux orifices de guidage O1 et O2 qui débouchent chacun sur la face supérieure FS et la face inférieure FI de chaque plaque P. Ces orifices de guidage O1, O2 permettent le passage des colonnettes de guidage 11, 12. Ils sont également ici diagonalement espacés sur chaque plaque P, mais ce choix n'est pas limitatif.

Lors de la réalisation du conditionnement du stack 20, un effort vertical de compression est appliqué sur celui-ci. Cet effort est globalement situé entre les colonnettes de guidage 11, 12, pouvant provoquer une flexion des plaques P que l'on empile, comme schématisée par les flèches F sur la figure 3B et ici sur la figure 4B. En cas de contact des plaques P avec les colonnettes 11, 12, comme schématisé précédemment sur la figure 3B, un phénomène non désirable d'arcboutement AC peut se produire.

La configuration proposée conformément à l'invention sur les figures 4A à 4D est telle que, par observation en section dans un plan horizontal d'étendue de chaque plaque P, les orifices de guidage O1, O2 sont alignés selon une première direction horizontale X et espacés d'une plus petite distance inter-orifices Do1. De plus, les colonnettes de guidage 11, 12 sont espacées d'une plus petite distance inter-éléments Dt1 qui est supérieure à la plus petite distance inter-orifices Do1.

La différence entre la plus petite distance inter-éléments Dt1 et la plus petite distance inter-orifices Do1 correspond au jeu interne Jm1. Ce jeu interne Jm1 est identique au niveau de chaque paire O1, 11 et O2, 12 d'orifice de guidage et de colonnette de guidage.

Par ailleurs, toujours selon la première direction horizontale X, les orifices de guidage O1, O2 sont espacés d'une plus grande distance inter-orifices Do2, et les colonnettes de guidage 11, 12 sont espacées d'une plus grande distance inter-éléments Dt2 qui est inférieure à la plus grande distance inter-orifices Do2.

La différence entre la plus grande distance inter-orifices Do2 et la plus grande distance inter-éléments Dt2 correspond au jeu externe Jm2. Avantageusement, ce jeu externe Jm2 est supérieur au jeu interne Jm1.

En conséquence, la flexion d'une plaque P, comme schématisé par les flèches F sur la figure 4B, va ici dans le sens de faciliter la descente de celle-ci verticalement. En effet, lors de la flexion, la plus petite distance inter-orifices Do1, mesurée selon la première direction horizontale X, soit la distance entre les points A₁ et A₁', va diminuer du fait du fléchissement de la plaque P, ce qui aura tendance à libérer le mouvement vertical de la plaque P car la plus petite distance inter-éléments Dt1, toujours mesurée selon la première distance horizontale X, entre les deux colonnettes 11 et 12 reste constante. Ainsi, le jeu interne Jm1' obtenu (voir figure 4B) va augmenter en comparaison avec le jeu Jm1.

De même, la plus grande distance inter-orifices Do2, à savoir la distance entre les points A₂ et A₂', va également diminuer lors de la flexion, comme visible sur la figure 4B. Cependant, du fait de la présence d'un jeu externe Jm2 bien plus important que le jeu interne Jm1, et du fait que la plus grande distance inter-éléments Dt2 ne varie pas, il n'y aura pas de contact entre la plaque P et les colonnettes 11, 12, et donc pas de phénomène de coincement ou d'arcboutement.

Afin d'éviter tout blocage de la plaque P sur les colonnettes 11, 12, le jeu interne Jm1 peut être compris entre 1 µm et 100 µm.

De même, le jeu externe Jm2 peut être compris entre 0,5 mm et 3 mm.

En particulier, pour une plus petite distance inter-orifices Do1 de l'ordre de 300 mm et une hauteur de plaque H de l'ordre de 0,6 mm, le jeu Jm1 peut être supérieur à 0,6 µm pour éviter tout blocage dans un mouvement de corps solide local de la plaque P. Ceci correspond à une valeur de jeu très faible et permet donc un guidage, et ainsi un positionnement, très précis de la plaque P par rapport aux colonnettes de guidage 11, 12.

De façon avantageuse, il faut également noter que le jeu externe Jm2 est identique pour les deux orifices de guidage O1, O2 et les deux colonnettes de guidage 11, 12.

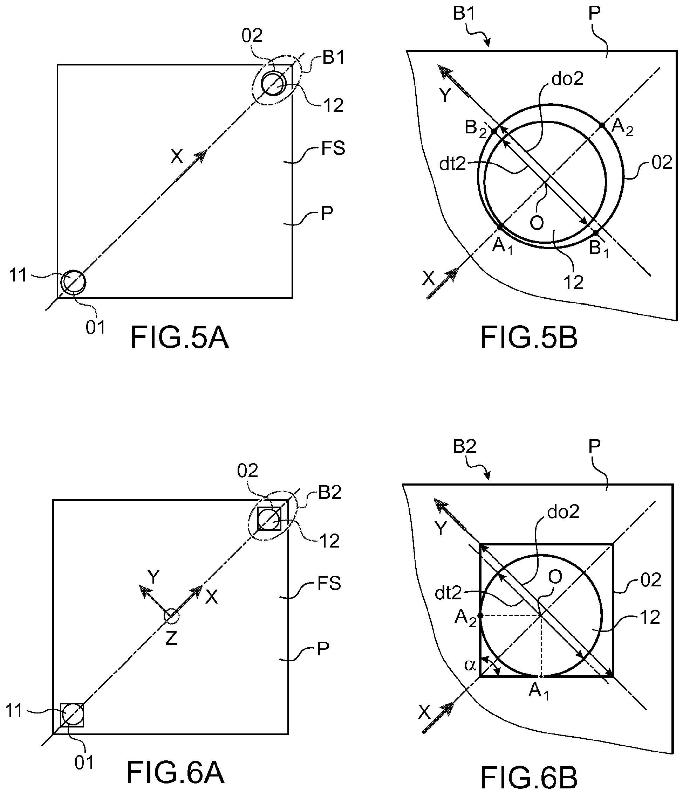

Par ailleurs, dans cet exemple des figures 4A à 4B, les orifices de guidage O1, O2 présentent chacun, en section, une forme oblongue. Dans ce cas, le rapport de dimensions entre la plus grande dimension d'orifice de guidage do2 de chaque orifice de guidage O1, O2, selon une deuxième direction horizontale Y perpendiculaire à la première direction horizontale X, à savoir la distance entre les points B₁ et B₂ ou entre les points B₁' et B₂' dans l'exemple des figures 4C et 4D, et la plus grande dimension d'élément de guidage dt2 de chaque élément de guidage 11, 12, mesurée selon la deuxième direction horizontale Y, à savoir ici le diamètre passant par le centre O des colonnettes 11, 12, comme représentées sur les figures 5B et 6B par exemple, peut être trop proche de 1. Autrement dit, les distances B₁B₂ et B₁'B₂' peuvent être sensiblement égales au diamètre des colonnettes 11, 12.

Alors, en cas de rotation de la plaque P selon la première direction horizontale X, il peut y avoir un arcboutement au niveau des points B₁, B₁', B₂ et B₂' de la forme oblongue (voir figures 4C et 4D). Afin d'éviter ce phénomène, une autre configuration conforme à l'invention peut être proposée.

Ainsi, dans l'exemple des figures 5A et 5B, les orifices de guidage O1, O2 correspondent à des cylindres dont la forme circulaire en section est plus grande que celle des colonnettes 11, 12. Autrement dit, le diamètre de chaque orifice de guidage O1, O2 est supérieur au diamètre de chaque colonnette de guidage 11, 12. Les orifices de guidage O1, O2 sont excentrés par rapport aux colonnettes de guidage 11, 12.

Un ajustement serré est conservé au niveau des points A₁ et A₁' mais les jeux sont maintenant plus importants au niveau des points B₁, B₂, B₁' et B₂'.

Précisément, la plus grande dimension d'orifice de guidage do2 de chaque orifice de guidage O1, O2, selon la deuxième direction horizontale Y, différente ici dans l'exemple des figures 5A et 5b de la distance B₁B₂ ou B₁'B₂', est supérieure à la plus grande dimension d'élément de guidage dt2 de chaque colonnette de guidage 11, 12, à savoir ici son diamètre passant par le centre O.

Avantageusement, le rapport entre la plus grande dimension d'orifice de guidage do2 et la plus grande dimension d'élément de guidage dt2, mesurées selon la deuxième direction horizontale Y, est compris entre 1 et 3.

Une troisième configuration possible de l'invention, illustrée sur les figures 6A et 6B, consiste en l'utilisation d'orifices de guidage 11, 12 de forme sensiblement carrée, plus larges, et excentrés par rapport à la position des colonnettes 11, 12.

Cette configuration décrit un principe proche de celle des figures 5A et 5B. Il utilise cependant ici des contacts en forme de « V » (A₁, O, A₂), comme visible sur la figure 6B.

Cette configuration empêche la rotation selon une troisième direction verticale Z, et conserve toujours l'avantage que les distances A₁A₁' ou A₂A₂' se réduisent évitant tout contact entre plaque P et colonnette 11, 12 lors de l'empilement en descente verticale pendant le procédé de conditionnement du stack 20. On évite donc tout problème d'arcboutement. L'angle α au plus proche du centre de la plaque P, à savoir l'angle α des deux plans de contact, peut être variable. Avantageusement, il est choisi pour être différent de 90°, étant notamment plus important que cette valeur de sorte à permettre un peu plus de possibilité en rotation selon les directions X et Z.

Lors du procédé de conditionnement d'un tel stack 20, il convient de conserver un écart sensiblement constant entre les colonnettes de guidage 11, 12 et les orifices de guidage 01, O2, notamment lors de la montée en température. Cet écart doit pouvoir rester supérieur à 0. Afin de garantir cela, il convient d'équilibrer les dilatations thermiques réglant à la fois la taille des colonnettes 11, 12 et la taille des plaques P, notamment par un choix judicieux des coefficients de dilatation thermique des matériaux utilisés, et un champ de température le plus homogène possible sur le montage complet.

Avantageusement, les colonnettes de guidage 11, 12 seront fixées dans un socle de conditionnement et un ou des mêmes matériaux seront utilisés pour les plaques P et pour le socle de conditionnement afin d'obtenir les mêmes coefficients de dilatation thermique.

L'invention trouve son application principale pour l'assemblage des empilements ou stacks de type SOEC/SOFC haute température. En particulier, l'invention est applicable pendant la phase de conditionnement, phase durant laquelle le stack diminue fortement de taille à cause de la fonte des joints en verre de l'assemblage comme décrit précédemment dans la partie relative à l'art antérieur et au contexte technique de l'invention.

## Revendications

1. Empilement (20) de cellules à oxydes solides de type SOEC/SOFC fonctionnant à haute température, constitué d'une pluralité de plaques (P) empilées les unes sur les autres selon une direction verticale sensiblement perpendiculaire à chaque plan horizontal d'étendue de chaque plaque (P), ladite pluralité de plaques (P) comportant au moins :
- une pluralité de cellules électrochimiques (C1, C2) formées chacune d'une cathode, d'une anode et d'un électrolyte intercalé entre la cathode et l'anode, et une pluralité d'interconnecteurs (5) agencés chacun entre deux cellules électrochimiques (C1, C2) adjacentes,
- une plaque terminale supérieure (P) et une plaque terminale inférieure (P), entre lesquelles la pluralité de cellules électrochimiques (C1, C2) et la pluralité d'interconnecteurs (5) sont enserrées,
ledit empilement (20) comportant en outre au moins deux éléments de guidage (11, 12) assurant le guidage en empilement vertical d'au moins une partie des plaques (P), chaque plaque (P) de ladite au moins une partie des plaques (P) comportant au moins deux orifices de guidage (O1, O2) débouchant chacun sur les faces supérieure (FS) et inférieure (FI) de chaque plaque (P) et permettant le passage desdits au moins deux éléments de guidage (11, 12),
**caractérisé en ce que**, par observation en section dans un plan horizontal d'étendue de chaque plaque (P) de ladite au moins une partie des plaques (P), lesdits au moins deux orifices de guidage (O1, O2) sont alignés selon une première direction horizontale (X) et espacés d'une plus petite distance inter-orifices (Do1), lesdits au moins deux éléments de guidage (11, 12) étant espacés d'une plus petite distance inter-éléments (Dt1) supérieure à la plus petite distance inter-orifices (Do1), la différence entre la plus petite distance inter-éléments (Dt1) et la plus petite distance inter-orifices (Do1), correspondant au jeu interne (Jm1), étant identique pour lesdits au moins deux orifices de guidage (O1, O2) et lesdits au moins deux éléments de guidage (11, 12),
**en ce que**, selon la première direction horizontale (X), lesdits au moins deux orifices de guidage (O1, O2) sont espacés d'une plus grande distance inter-orifices (Do2), lesdits au moins deux éléments de guidage (11, 12) étant espacés d'une plus grande distance inter-éléments (Dt2) inférieure à la plus grande distance inter-orifices (Do2), la différence entre la plus grande distance inter-orifices (Do2) et la plus grande distance inter-éléments (Dt2), correspondant au jeu externe (Jm2),
et **en ce que** le jeu externe (Jm2) est supérieur au jeu interne (Jm1).

2. Empilement selon la revendication 1, **caractérisé en ce que** le jeu interne (Jm1) est compris entre 1 µm et 100 µm.

3. Empilement selon la revendication 1 ou 2, **caractérisé en ce que** le jeu externe (Jm2) est compris entre 0,5 mm et 3 mm.

4. Empilement selon l'une des revendications précédentes, **caractérisé en ce que** le jeu externe (Jm2) est identique pour lesdits au moins deux orifices de guidage (O1, O2) et lesdits au moins deux éléments de guidage (11, 12).

5. Empilement selon l'une quelconque des revendications précédentes, **caractérisé en ce que** lesdits au moins deux orifices de guidage (O1, O2) présentent la même forme et les mêmes dimensions.

6. Empilement selon la revendication 5, **caractérisé en ce que** lesdits au moins deux orifices de guidage (O1, O2) présentent, en section, une forme oblongue.

7. Empilement selon la revendication 6, **caractérisé en ce que** lesdits au moins deux orifices de guidage (O1, O2) présentent, en section, une forme circulaire.

8. Empilement selon la revendication 6, **caractérisé en ce que** lesdits au moins deux orifices de guidage (O1, O2) présentent, en section, une forme polygonale, notamment une forme carrée ou rectangulaire, avec notamment au moins l'angle (α) au plus proche du centre de la plaque (P) faisant un angle différent de 90°, notamment supérieur à 90°.

9. Empilement selon l'une quelconque des revendications précédentes, **caractérisé en ce que** chaque plaque (P) de ladite au moins une partie des plaques (P) est de forme carrée ou rectangulaire et **en ce que** lesdits au moins deux orifices de guidage (O1, O2) sont diagonalement opposés.

10. Empilement selon l'une quelconque des revendications précédentes, **caractérisé en ce que** lesdits au moins deux éléments de guidage (11, 12) sont des tiges de guidage (11, 12) de forme cylindrique, et notamment de forme circulaire en section.

11. Empilement selon l'une quelconque des revendications précédentes, **caractérisé en ce que**, par observation en section dans un plan horizontal d'étendue de chaque plaque (P) de ladite au moins une partie des plaques (P), la plus grande dimension d'orifice de guidage (do2) de chaque orifice de guidage (O1, O2), selon une deuxième direction horizontale (Y) perpendiculaire à la première direction horizontale (X), est supérieure à la plus grande dimension d'élément de guidage (dt2) de chaque élément de guidage (11, 12), mesurée selon la deuxième direction horizontale (Y).

12. Empilement selon la revendication 11, **caractérisé en ce que** le rapport entre la plus grande dimension d'orifice de guidage (do2) et la plus grande dimension d'élément de guidage (dt2), mesurées selon la deuxième direction horizontale (Y), est compris entre 1 et 3.

13. Procédé de conditionnement d'un empilement (20) de cellules à oxydes solides de type SOEC/SOFC fonctionnant à haute température selon l'une quelconque des revendications précédentes, **caractérisé en ce qu'**il comporte l'étape de guidage en empilement vertical d'au moins une partie des plaques (P) constitutives de l'empilement (20) par le biais desdits au moins deux éléments de guidage (11, 12).

14. Procédé selon la revendication 13, **caractérisé en ce que** l'étape de guidage est mise en œuvre tout en conservant un écart sensiblement constant entre lesdits au moins deux éléments de guidage (11, 12) et lesdits au moins deux orifices de guidage (O1, O2).

15. Procédé selon la revendication 13 ou 14, **caractérisé en ce que**, lesdits au moins deux éléments de guidage (11, 12) étant fixés dans un socle de conditionnement, le procédé comporte l'étape d'utilisation de mêmes coefficients de dilatation thermique pour les matériaux des plaques (P) et du socle de conditionnement.

## Patentansprüche

1. Stapel (20) von Festoxidzellen des SOEC/SOFC-Typs, der bei hoher Temperatur betrieben wird, bestehend aus einer Vielzahl von Platten (P), die in einer vertikalen Richtung, die im Wesentlichen senkrecht zu jeder horizontalen Ausdehnungsebene jeder Platte (P) ist, aufeinander gestapelt sind, wobei die Vielzahl von Platten (P) mindestens Folgendes aufweisen:
- eine Vielzahl von elektrochemischen Zellen (C1, C2), die jeweils aus einer Kathode, einer Anode und einem zwischen Kathode und Anode eingelegten Elektrolyt gebildet sind, und eine Vielzahl von Zwischenverbindern (5), die jeweils zwischen zwei benachbarten elektrochemischen Zellen (C1, C2) angeordnet sind,
- eine obere Endplatte (P) und eine untere Endplatte (P), zwischen denen die Vielzahl von elektrochemischen Zellen (C1, C2) und die Vielzahl von Verbindungselementen (5) eingeklemmt sind,
wobei der Stapel (20) ferner mindestens zwei Führungselemente (11, 12) aufweist, die die vertikale Stapelführung des mindestens einen Teils der Platten (P) gewährleisten,
wobei jede Platte (P) des mindestens einen Teils der Platten (P) mindestens zwei Führungsöffnungen (O1, O2) aufweist, die jeweils auf die obere (FS) und untere (FI) Seite jeder Platte (P) münden und den Durchgang der mindestens zwei Führungselemente (11, 12) ermöglichen,
**dadurch gekennzeichnet, dass** durch Querschnittsbeobachtung in einer horizontalen Ausdehnungsebene jeder Platte (P) des mindestens einen Teils der Platten (P) die mindestens zwei Führungsöffnungen (01, O2) in einer ersten horizontalen Richtung (X) ausgerichtet sind und mit einem kleineren Lochabstand (Do1) beabstandet sind, wobei die mindestens zwei Führungselemente (11, 12) mit einem kleineren Elementabstand (Dt1) beabstandet sind, der größer ist als der kleinste Lochabstand (Do1), wobei die Differenz zwischen dem kleinsten Elementabstand (Dt1) und dem kleinsten Lochabstand (Do1), der dem inneren Spiel (Jm1) entspricht, für die mindestens zwei Führungsöffnungen (01, O2) und die mindestens zwei Führungselemente (11, 12) identisch ist,
dass die mindestens zwei Führungsöffnungen (O1, O2) in der ersten horizontalen Richtung (X) um einen größeren Lochabstand (Do2) beabstandet sind, wobei die mindestens zwei Führungselemente (11, 12) um einen größeren Elementabstand (Dt2) beabstandet sind, der kleiner ist als der größere Lochabstand (Do2), wobei die Differenz zwischen dem größten Lochabstand (Do2) und dem größten Elementabstand (Dt2) dem äußeren Spiel (Jm2) entspricht,
und dass das äußere Spiel (Jm2) größer ist als das innere Spiel (Jm1).

2. Stapel nach Anspruch 1, **dadurch gekennzeichnet, dass** das innere Spiel (Jm1) zwischen 1 µm und 100 µm beträgt.

3. Stapel nach Anspruch 1 oder 2, **dadurch gekennzeichnet, dass** das äußere Spiel (Jm2) zwischen 0,5 mm und 3 mm beträgt.

4. Stapel nach einem der vorhergehenden Ansprüche, **dadurch gekennzeichnet, dass** das äußere Spiel (Jm2) für die mindestens zwei Führungsöffnungen (O1, O2) und die mindestens zwei Führungselemente (11, 12) identisch ist.

5. Stapel nach einem der vorhergehenden Ansprüche, **dadurch gekennzeichnet, dass** die mindestens zwei Führungsöffnungen (O1, O2) dieselbe Form und dieselben Abmessungen besitzen.

6. Stapel nach Anspruch 5, **dadurch gekennzeichnet, dass** die mindestens zwei Führungsöffnungen (01, O2) im Querschnitt eine längliche Form besitzen.

7. Stapel nach Anspruch 6, **dadurch gekennzeichnet, dass** die mindestens zwei Führungsöffnungen (O1, O2) im Querschnitt eine kreisförmige Form besitzen.

8. Stapel nach Anspruch 6, **dadurch gekennzeichnet, dass** die mindestens zwei Führungsöffnungen (O1, O2) im Querschnitt eine polygonale Form, insbesondere eine quadratische oder rechteckige Form besitzen, wobei insbesondere mindestens der Winkel (α), der der Mitte der Platte (P) am nächsten liegt, einen Winkel ungleich 90°, insbesondere größer als 90°, bildet.

9. Stapel nach einem der vorhergehenden Ansprüche, **dadurch gekennzeichnet, dass** jede Platte (P) des mindestens einen Teils der Platten (P) quadratisch oder rechteckig geformt ist und dass die mindestens zwei Führungsöffnungen (O1, O2) diagonal gegenüberliegen.

10. Stapel nach einem der vorhergehenden Ansprüche, **dadurch gekennzeichnet, dass** die mindestens zwei Führungselemente (11, 12) Führungsstäbe (11, 12) mit zylindrischer Form, insbesondere mit kreisförmiger Querschnittsform, sind.

11. Stapel nach einem der vorhergehenden Ansprüche, **dadurch gekennzeichnet, dass** durch Querschnittsbetrachtung in einer horizontalen Ausdehnungsebene jeder Platte (P) des mindestens einen Teils der Platten (P) die größte Führungsöffnungsabmessung (do2) jeder Führungsöffnung (01, O2) in einer zweiten horizontalen Richtung (Y) senkrecht zu der ersten horizontalen Richtung (X) größer ist als die größte Führungselementabmessung (dt2) jedes Führungselements (11, 12), gemessen entlang der zweiten horizontalen Richtung (Y).

12. Stapel nach Anspruch 11, **dadurch gekennzeichnet, dass** das Verhältnis zwischen der größten Führungsöffnungsabmessung (do2) und der größten Führungselementabmessung (dt2), gemessen in der zweiten horizontalen Richtung (Y), zwischen 1 und 3 liegt.

13. Verfahren zum Konditionieren eines Stapels (20) von Festoxidzellen des SOEC/SOFC-Typs, der bei hoher Temperatur betrieben wird, nach einem der vorhergehenden Ansprüche, **dadurch gekennzeichnet, dass** es den Schritt der vertikalen Stapelführung des mindestens einen Teils der Platten (P), die den Stapel (20) bilden, durch die mindestens zwei Führungselemente (11, 12) aufweist.

14. Verfahren nach Anspruch 13, **dadurch gekennzeichnet, dass** der Schritt der Führung ausgeführt wird, während ein im Wesentlichen konstanter Abstand zwischen den mindestens zwei Führungselementen (11, 12) und den mindestens zwei Führungsöffnungen (O1, O2) beibehalten wird.

15. Verfahren nach Anspruch 13 oder 14, **dadurch gekennzeichnet, dass** die mindestens zwei Führungselemente (11, 12) in einem Verpackungssockel befestigt sind und das Verfahren den Schritt der Verwendung gleicher Wärmeausdehnungskoeffizienten für die Materialien der Platten (P) und des Verpackungssockels aufweist.

## Claims

1. A stack (20) of SOEC/SOFC- type solid-oxide cells operating at high temperature, consisting of a plurality of plates (P) stacked on top of one another according to a vertical direction substantially perpendicular to each horizontal plane of extent of each plate (P), said plurality of plates (P) including at least:
- a plurality of electrochemical cells (C1, C2) each formed of a cathode, an anode and an electrolyte interposed between the cathode and the anode, and a plurality of interconnectors (5) each arranged between two adjacent electrochemical cells (C1, C2),
- an upper end plate (P) and a lower end plate (P), between which the plurality of electrochemical cells (C1, C2) and the plurality of interconnectors (5) are sandwiched,
said stack (20) further including at least two guiding elements (11, 12) ensuring guidance of at least part of the plates (P) into a vertical stacking,
each plate (P) of said at least part of the plates (P) including at least two guiding orifices (O1, O2) each opening onto the upper (FS) and lower (FI) faces of each plate (P) and enabling passage of said at least two guiding elements (11, 12),
**characterised in that**, when observed in section in a horizontal plane of extent of each plate (P) of said at least part of the plates (P), said at least two guiding orifices (O1, O2) are aligned according to a first horizontal direction (X) and spaced apart by a smallest inter-orifice distance (Do1), said at least two guiding elements (11, 12) being spaced apart by a smallest inter-element distance (Dt1) larger than the smallest inter-orifice distance (Do1), the difference between the smallest inter-element distance (Dt1) and the smallest inter-orifice distance (Do1), corresponding to the inner clearance (Jm1), being identical for said at least two guiding orifices (O1, O2) and said at least two guiding elements (11, 12),
**in that**, according to the first horizontal direction (X), said at least two guiding orifices (O1, O2) are spaced apart by a largest inter-orifice distance (Do2), said at least two guiding elements (11, 12) being spaced apart by a largest inter-orifice distance (Dt2) smaller than the largest inter-orifice distance (Do2), the difference between the largest inter-orifice distance (Do2) and the largest inter-element distance (Dt2), corresponding to the outer clearance (Jm2),
and **in that** the outer clearance (Jm2) is larger than the inner clearance (Jm1).

2. The stack according to claim 1, **characterised in that** the inner clearance (Jm1) is comprised between 1 µm and 100 µm.

3. The stack according to claim 1 or 2, **characterised in that** the outer clearance (Jm2) is comprised between 0.5 mm and 3 mm.

4. The stack according to one of the preceding claims, **characterised in that** the outer clearance (Jm2) is identical for said at least two guiding orifices (01, 02) and said at least two guiding elements (11, 12).

5. The stack according to any one of the preceding claims, **characterised in that** said at least two guiding orifices (O1, O2) have the same shape and the same dimensions.

6. The stack according to claim 5, **characterised in that** said at least two guiding orifices (O1, O2) have, in section, an oblong shape.

7. The stack according to claim 6, **characterised in that** said at least two guiding orifices (O1, O2) have, in section, a circular shape.

8. The stack according to claim 6, **characterised in that** said at least two guiding orifices (O1, O2) have, in section, a polygonal shape, in particular a square or rectangular shape, in particular with at least the angle (α) the closest to the centre of the plate (P) forming an angle different from 90°, in particular larger than 90°.

9. The stack according to any one of the preceding claims, **characterised in that** each plate (P) of said at least part of the plates (P) is square or rectangular shaped and **in that** said at least two guiding orifices (O1, O2) are diagonally opposite.

10. The stack according to any one of the preceding claims, **characterised in that** said at least two guiding elements (11, 12) are guiding rods (11, 12) having a cylindrical shape, and in particular having a circular shape in section.

11. The stack according to any one of the preceding claims, **characterised in that**, when observed in section in a horizontal plane of extent of each plate (P) of said at least part of the plates (P), the largest guiding orifice dimension (do2) of each guiding orifice (O1, O2), according to a second horizontal direction (Y) perpendicular to the first horizontal direction (X), is larger than the largest guiding element dimension (dt2) of each guiding element (11, 12), measured according to the second horizontal direction (Y).

12. The stack according to claim 11, **characterised in that** the ratio between the largest guiding orifice dimension (do2) and the largest guiding element dimension (dt2), measured according to the second horizontal direction (Y), is comprised between 1 and 3.

13. A method for packaging a stack (20) of SOEC/SOFC-type solid-oxide cells operating at high temperature according to any one of the preceding claims, **characterised in that** it includes the step of guiding into a vertical stacking at least part of the plates (P) making up the stack (20) by means of said at least two guiding elements (11, 12).

14. The method according to claim 13, **characterised in that** the guiding step is implemented while preserving a substantially constant gap between said at least two guiding elements (11, 12) and said at least two guiding orifices (O1, O2).

15. The method according to claim 13 or 14, **characterised in that**, said at least two guiding elements (11, 12) being fixed in a packaging base, the method includes the step of using the same coefficients of thermal expansion for the materials of the plates (P) and of the conditioning base.
